# EUROPEAN PATENT APPLICATION

(11) **EP 3 951 746 A1**
(43) Date of publication of application: **09.02.2022**
(21) Application number: 21181434.8
(22) Date of filing: 24.06.2021
(51) Int. Cl.: G08G 1/16, G08G 1/01, G08G 5/04, G08G 5/00

(54) **COLLISION AVOIDANCE BASED ON CENTRALIZED COORDINATION OF VEHICLE OPERATIONS**

(30) Priority: 07.08.2020 US 202063062685 P
(71) Applicant: The Boeing Company, Chicago, IL 60606 (US)
(72) Inventor: HUI, Leo Ho Chi, CHICAGO, 60606 (US); KRIKORIAN, Haig Francis, CHICAGO, 60606 (US)
(74) Representative: Bugnion S.p.A. - US1

(57) **Abstract**

A computer-implemented method performed by a centralized coordinated vehicle guidance system may include: obtaining analytics data for a plurality of vehicles or objects centrally communicating with or detected by the centralized coordinated vehicle guidance system; detecting, based on the analytics data, a collision event within one or more vehicle-object pairs; determining trajectory adjustment information for one or more vehicle in the vehicle-object pairs involved in the collision event; and outputting the trajectory adjustment information to cause the vehicle to modify its trajectory.

## Description

### BACKGROUND

Collision avoidance (CA) in vehicles may involve avoidance of other known objects (e.g., other vehicles, missiles, bullets, or some form of projectile) or unknown objects (e.g., building, solid structure, or other vehicle). Here, an object may be any physical object including a vehicle. Current CA techniques are focused on avoidance between objects that have disparate or opposite trajectories, and not addressing those that have near parallel trajectories and velocities.

### SUMMARY

In one example aspect, a computer-implemented method performed by a centralized coordinated vehicle guidance system may include: obtaining analytics data for a plurality of vehicles or objects centrally communicating with or detected by the centralized coordinated vehicle guidance system; detecting, based on the analytics data, a collision event within a vehicle-object pair; determining trajectory adjustment information for a vehicle in the vehicle-object pair involved in the collision event; and outputting the trajectory adjustment information to cause the vehicle to modify its trajectory.

In another example aspect, a computer program product includes a computer readable storage medium having program instructions embodied therewith. The program instructions are executable by a computing device of centralized coordinated vehicle guidance system to cause the computing device to perform operations including: obtaining analytics data for a plurality of vehicles or objects centrally communicating with or detected by the centralized coordinated vehicle guidance system; detecting, based on the analytics data, a collision event within a vehicle-object pair; determining trajectory adjustment information for a vehicle in the vehicle-object pair involved in the collision event; and outputting the trajectory adjustment information to cause the vehicle to modify its trajectory.

In another example aspect, a system includes: a processor, a computer readable memory, a non-transitory computer readable storage medium associated with a computing device of a centralized coordinated vehicle guidance system, and program instructions executable by the computing device to cause the computing device to perform operations including: obtaining analytics data for a plurality of vehicles or objects centrally communicating with or detected by the centralized coordinated vehicle guidance system; detecting, based on the analytics data, a collision event within a vehicle-object pair; determining trajectory adjustment information for a vehicle in the vehicle-object pair involved in the collision event; and outputting the trajectory adjustment information to cause the vehicle to modify its trajectory.

### BRIEF DESCRIPTION OF THE DRAWINGS

FIG. 1 illustrates an example overview and environment in accordance with aspects of the present disclosure.
FIG. 2 illustrates example components and operations of a collision avoidance system (CAS) in accordance with aspects of the present disclosure.
FIG. 3 illustrates an example flowchart of a process for identifying vehicles that are at risk for collision with other vehicles and objects using a coordinated and centralized vehicle communications approach in accordance with aspects of the present disclosure.
FIG. 4 illustrates an example flowchart of a process for generating and outputting delta velocity information for adjusting the trajectory of vehicles at risk for a collision.
FIG. 5 illustrates example trajectory maps showing a steer-off approach for avoiding a collision between two vehicles traveling in substantially the same path.
FIG. 6 illustrates example trajectory maps showing a dog-leg approach for avoiding a collision between a vehicle and an object traveling in substantially opposite paths.
FIG. 7 illustrates example components of a device that may be used within environment of FIG. 1

### DETAILED DESCRIPTION

Certain examples of the disclosure will hereafter be described with reference to the accompanying drawings, wherein like reference numerals denote like elements. It should be understood, however, that the accompanying drawings illustrate only the various implementations described herein and are not meant to limit the scope of various technologies described herein. The drawings show and describe various examples of the current disclosure.

Current collision avoidance (CA) techniques are focused on avoidance between adverse objects that have disparate or opposite trajectories, rather than non-adverse objects that may have near parallel trajectories and velocities. As such, current CA techniques may not sufficiently detect a situation in which one vehicle may sway off course, thereby endangering the vehicle to hit another vehicle or object, as may be the case with friendly vehicles that may be traveling in relatively the same direction (e.g. team member aircraft in formation, space vehicles, satellites, and/or other vehicles, spacecraft, vehicles on a roadway, etc.). Moreover, existing systems are deficient on detecting collision in which multiple vehicles are involved, and for providing collision avoidance guidance in a 3-dimensional domain, or providing real-time collision avoidance for space vehicles. Accordingly, aspects of the present disclosure may include a collision avoidance system (CAS) that centralizes vehicle and navigation analytics data for centralized coordination and control of a group of vehicles. In this way, collisions may be avoided, whether the vehicles may be traveling in relatively the same direction, or whether the vehicles are traveling in relatively opposite directions. Further, aspects of the present disclosure may be used to provide collision avoidance guidance in which multiple vehicles are involved, and in the 3D domain (e.g., for space vehicles). Moreover, aspects of the present disclosure provide real-time collision avoidance (e.g., for use in space vehicles).

In some examples, a centralized mission computer or centralized coordinated vehicle guidance system may monitor vehicle operations and navigation analytics data for each vehicle in a group of vehicles, project the trajectories of each vehicle in the group, determine whether one or more of the vehicles are at risk for colliding based on their projected trajectories, and provide guidance vectors to adjust the trajectory of one or more of the vehicles to avoid a collision. As an illustrative example, the centralized coordinated vehicle guidance system may manage and coordinate the navigation of spacecraft (which may be traveling in similar directions and trajectories) so as to avoid collisions (e.g., with other vehicles or objects), and minimize disruptions in travel, while also minimizing fuel loss from adjusting the trajectory of the spacecraft.

As further described herein, the centralized coordinated vehicle guidance system may adjust the trajectory of vehicles based on monitoring analytics information in real-time for each connected vehicle and/or detected object. Example analytics information that may be monitored may include navigational system data, position data, planned trajectory data, kinematics data, fuel consumption data, fuel level information, or the like. Further, as part of trajectory adjustment, the centralized coordinated vehicle guidance system may factor into account vehicle movement capabilities, maneuverability capabilities, power, acceleration/velocity, vehicle fuel efficiency, etc. In this way, the centralized coordinated vehicle guidance system may centralize vehicle data and operations to accurately track the trajectory of vehicles. This centralized coordination of vehicle data and vehicle operations may forecast potential collisions sufficiently in advance. Further the centralized coordinated vehicle guidance system may provide guidance vectors and/or control instructions that adjust the trajectory of vehicles to avoid collisions. Further, the collision of vehicles that travel in substantially the same direction may be avoided.

Examples of the disclosure may include a system, a method, and/or a computer program product at any possible technical detail level of integration. The computer program product may include a computer readable storage medium (or media) having computer readable program instructions thereon for causing a processor to carry out aspects of the present disclosure.

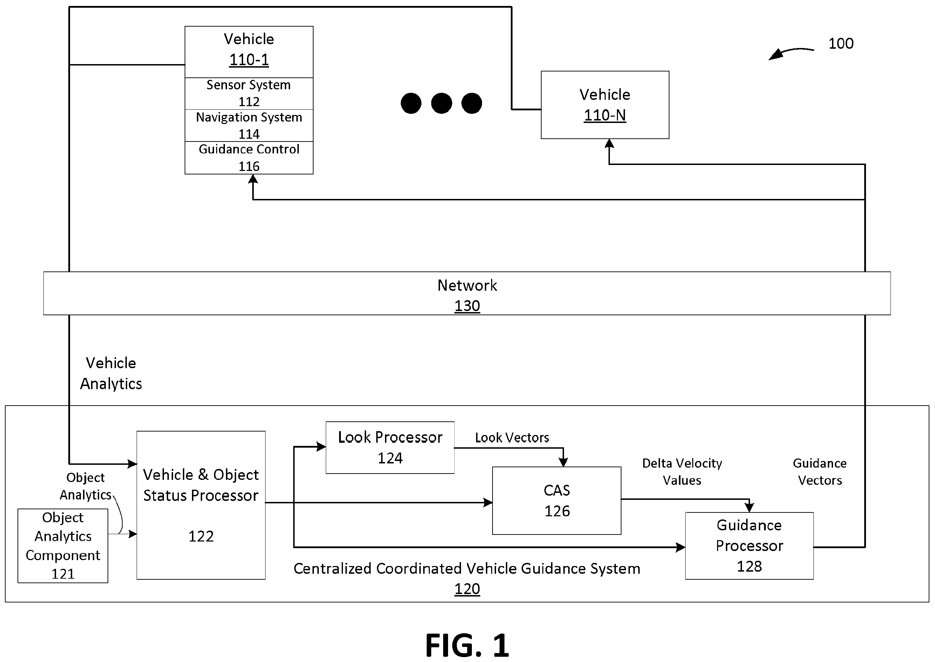

FIG. 1 shows an example overview and environment in accordance with aspects of the present disclosure. As shown in FIG, 1, environment 100 includes vehicles 110-1 through 110-N (where N is an integer greater than or equal to 2), a centralized coordinated vehicle guidance system 120, and a network 130.

The vehicles 110 may include any type or variety of vehicles, such as ground vehicles, spacecraft, aircraft, or the like. In some examples, each vehicle 110 may include a sensor system 112, a navigation system 114, a guidance control 116, and/or other computing and propulsion components for supporting the operations, guidance, navigation, and/or movement of the vehicle 110. In an example in which the vehicle 110 is a spacecraft, the sensor system 112 may include object detection sensors, motion sensors, temperature sensors, fuel level sensors, vehicle operation sensors, and/or any other variety of sensors. The navigation system 114 may include one or more computing devices that provides navigation services for the vehicle 110, and may track the actual and planned route, path, and/or trajectory of the vehicle 110. In some examples, the navigation system 114 may track vehicle movement information, such as the speed, acceleration, position, etc. The guidance control 116 may include one or more computing devices that controls and/or guides the trajectory of the vehicle 110. In some examples, each vehicle 110 may communicate with the centralized coordinated vehicle guidance system 120 for centralized coordinated control of the vehicles 110 in connection with collision avoidance. As described herein, each vehicle 110 may provide vehicle analytics data to the centralized coordinated vehicle guidance system 120. Example vehicle analytics data may include sensor readings, speed, acceleration, position, actual and planned trajectory, vehicle specifications (e.g., vehicle type, vehicle size, maneuverability capabilities, technical specifications, etc.), or the like.

The centralized coordinated vehicle guidance system 120 may include one or more computing devices that centralizes the operations, control, and/or analytics data of vehicles. Further, the centralized coordinated vehicle guidance system 120 may monitor vehicle and object analytics data for detecting potential collisions between the vehicles 110 and/or other objects. In some examples, the centralized coordinated vehicle guidance system 120 may be implemented in a vehicle 110. Additionally, or alternatively, the centralized coordinated vehicle guidance system 120 may be a ground-based unit, or a distributed group of ground-based systems, servers, and computing devices. As further shown in FIG. 1, the centralized coordinated vehicle guidance system 120 may include an object analytics component 121, a vehicle and object status processor 122, a look processor 124, a collision avoidance system (CAS) 126, and a guidance processor 128.

The object analytics component 121 may detect the presence of objects within a vicinity of the vehicles 110. As described herein, an object may include a vehicle not connected to the centralized coordinated vehicle guidance system 120, a stationary object, an airborne object, a celestial object, or the like. In some examples, the object analytics component 121 may acquire analytics data associated with an object, such as the object's shape/dimensions, object's image, object type, velocity, acceleration, travel path, etc.

The vehicle and object status processor 122 may include one or more computing devices that ingests the vehicle analytics and the object analytics, and provides all or a portion of the vehicle and/or object analytics data to the look processor 124, the CAS 126, and/or the guidance processor 128. In some examples, the vehicle and object status processor 122 may process, modify, prune, trim, and/or filter the vehicle analytics and/or the object analytics.

The look processor 124 may include one or more computing devices that identifies a field of view of a vehicle 110 in relation to its propulsion system (e.g., the field of view of sensors implemented on the vehicle 110). The look processor 124 may provide look vectors to the CAS 126 in which the look vectors indicate to the CAS 126 the direction and position in which sensor readings are associated. The look vectors allow the CAS 126 to more accurately forecast a potential collision, and the adjustments to be made for avoiding the collision.

The CAS 126 may include one or more computing devices that receives the look vectors (e.g., from the look processor 124), the processed vehicle analytics data, and/or the processed object analytics data (e.g., from the vehicle and object status processor 122). The CAS 126 may monitor the received data and detect a potential collision between one or more vehicles 110 and/or objects (e.g., based on the forecasted trajectories, velocities, accelerations, etc.). In some examples, the CAS 126 may detect potential collisions further based on calculating a zero-effort miss value, and a time to the zero-effort miss. The CAS 126 may determine delta velocity values which the guidance processor 128 may convert into guidance vectors. In some examples, the guidance processor 128 may output the guidance vectors to a vehicle 110, and the vehicle 110 may convert the guidance vectors into propulsion system commands that, when executed, alter the trajectory of the vehicles 110-1 to avoid a potential collision.

The network 130 may include one or more wired and/or wireless networks. For example, the network 130 may include a cellular network (e.g., a second generation (2G) network, a third generation (3G) network, a fourth generation (4G) network, a fifth generation (5G) network, a long-term evolution (LTE) network, a global system for mobile (GSM) network, a code division multiple access (CDMA) network, an evolution-data optimized (EVDO) network, or the like), a public land mobile network (PLMN), and/or another network. Additionally, or alternatively, the network 130 may include a local area network (LAN), a wide area network (WAN), a metropolitan network (MAN), the Public Switched Telephone Network (PSTN), an ad hoc network, a managed Internet Protocol (IP) network, a virtual private network (VPN), an intranet, the Internet, a fiber optic-based network, and/or a combination of these or other types of networks. In examples, the network 130 may include copper transmission cables, optical transmission fibers, wireless transmission, routers, firewalls, switches, gateway computers and/or edge servers.

The quantity of devices and/or networks in the environment 100 is not limited to what is shown in FIG. 1. In practice, the environment 100 may include additional devices and/or networks; fewer devices and/or networks; different devices and/or networks; or differently arranged devices and/or networks than illustrated in FIG. 1. Also, in some implementations, one or more of the devices of the environment 100 may perform one or more functions described as being performed by another one or more of the devices of the environment 100. Devices of the environment 100 may interconnect via wired connections, wireless connections, or a combination of wired and wireless connections.

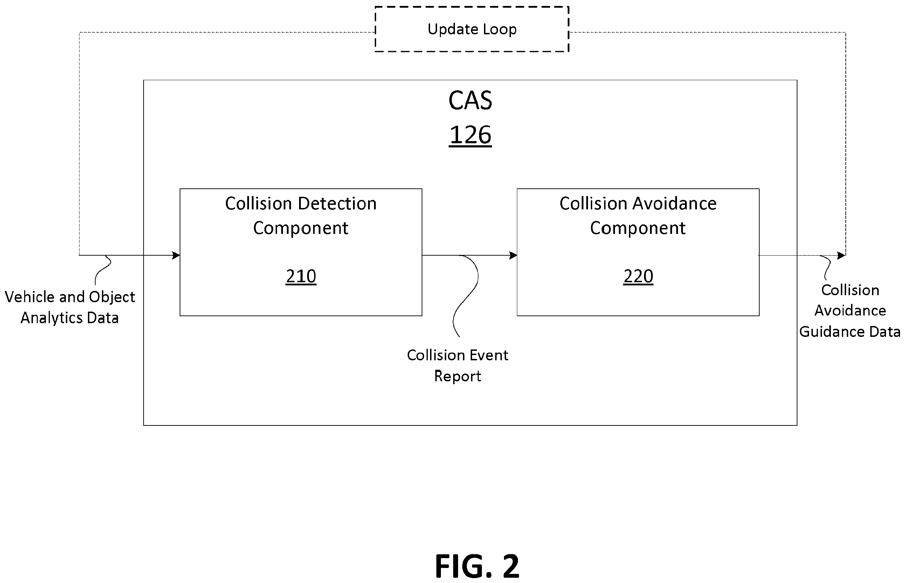

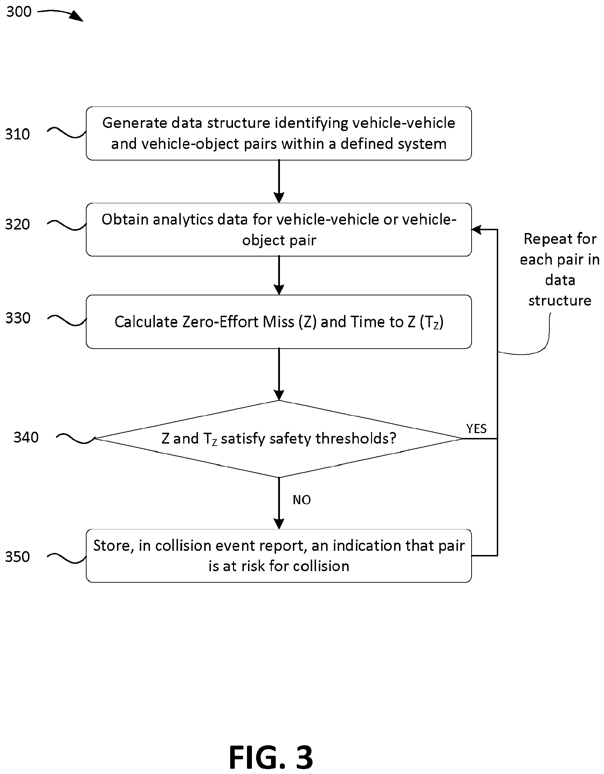

FIG. 2 illustrates example components and operations of a collision avoidance system (CAS) in accordance with aspects of the present disclosure. As shown in FIG. 2, the CAS 126 may include a collision detection component 210 and a collision avoidance component 220. In some examples, the collision detection component 210 may include one or more computing devices that receives vehicle and objects analytics data, and identifies vehicles 110 that are at risk of collision (e.g., with other vehicles 110 and/or with objects). As described herein, the collision detection component 210 may determine whether a pair of vehicles 110 and/or a vehicle 110 and an object are at risk for collision by using any suitable collision detection technique, such as by calculating a zero-effort miss value (*Z*), and a time to the zero-effort miss (*T_{Z}*). If, for example, the values for *Z* and *Tz* do not satisfy safety thresholds, the collision detection component 210 may detect that the vehicle 110 is at risk for a collision. In some examples, the collision detection component 210 may generate a collision event report identifying vehicles 110 that are at risk for a collision. Additional operations of the collision detection component 210 are described in greater detail herein with respect to FIG. 3.

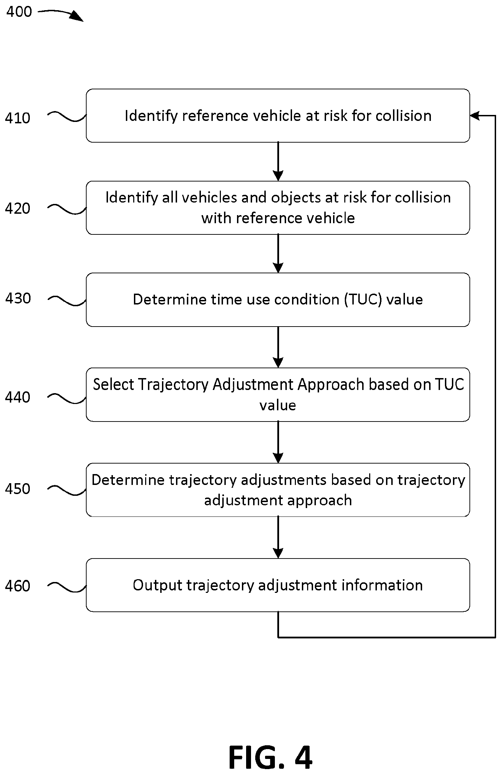

The collision avoidance component 220 may include one or more computing devices that receives the collision event report (e.g., from the collision detection component 210), and generates collision avoidance guidance data. In some examples, the collision avoidance guidance data may include vectors, navigation instructions/commands, or the like that, when received and executed by a vehicle 110, cause the vehicle 110 to adjust its trajectory to avoid a collision. Additional operations of the collision avoidance component 220 are described in greater detail herein with respect to FIG. 4.

As further shown in FIG. 2, the CAS 126 may incorporate an update loop to update the collision avoidance guidance data in a loop. For example, the CAS 126 may continue to monitor vehicle and object analytics data and generate updated collision avoidance guidance data to continuously monitor, in real time, for collision risks and provide avoidance guidance to the vehicles 110 to avoid collisions in real time.

FIG. 3 shows an example flowchart of a process for identifying vehicles that are at risk for collision with other vehicles and objects using a coordinated and centralized vehicle communications approach in accordance with aspects of the present disclosure. The blocks of FIG. 3 may be implemented in the environment of FIG. 1, for example, and are described using reference numbers of elements depicted in FIG. 1. The flowchart illustrates the architecture, functionality, and operation of possible implementations of systems, methods, and computer program products according to various examples of the present disclosure.

As shown in FIG. 3, process 300 may include generating a data structure identifying vehicle-object pairs within a defined system (block 310). For example, the collision detection component 210 may generate a data structure to identify vehicle-object pairs within a defined system (e.g. a defined boundary, region, set of coordinates, or the like). A "vehicle-object pair" includes a group with one vehicle and one detected object within the defined system (e.g., a pair including one vehicle and another vehicle, or a pair including one vehicle and another type of object). As an example, assume that four vehicles (e.g., collision detection component 210-1, collision detection component 210-2, collision detection component 210-3, and collision detection component 210-4) are connected to the centralized coordinated vehicle guidance system 120 and within the defined system. Given this assumption, one vehicle-object pair includes collision detection component 210-1 and collision detection component 210-2. Another vehicle-object pair includes collision detection component 210-1 and collision detection component 210-2. Similarly, another vehicle-object pair includes collision detection component 210-1 and collision detection component 210-3, and so on and so forth. The collision detection component 210 may store information identifying all of the vehicle-object pairs.

Process 300 also may include determining analytics data for a vehicle-object pair (block 320). For example, the collision detection component 210 may obtain analytics data (e.g., vehicle or object analytics data for each vehicle 110 or object) for a particular vehicle-object pair identified in the data structure. As previously mentioned, example vehicle analytics data may include sensor readings, speed, acceleration, position, actual and planned trajectory, vehicle specifications (e.g., vehicle type, vehicle size, maneuverability capabilities, technical specifications, etc.), or the like. Additionally, or alternatively, vehicle analytics data may include, between each vehicle-object pair, the relative speed, positions, accelerations, maneuvers, etc. Example object analytics data may include the object's shape/dimensions, object's image, object type, velocity, acceleration, travel path, etc. In some examples, the vehicle and/or object analytics data may be used to plot or map a future predicted trajectory between the two vehicles 110 in a vehicle-object pair, and/or the trajectory between a vehicle 110 and an object in a vehicle-object pair. As described herein, the vehicle and/or object analytics data may be used to detect a vehicle collision event, as described in greater detail herein.

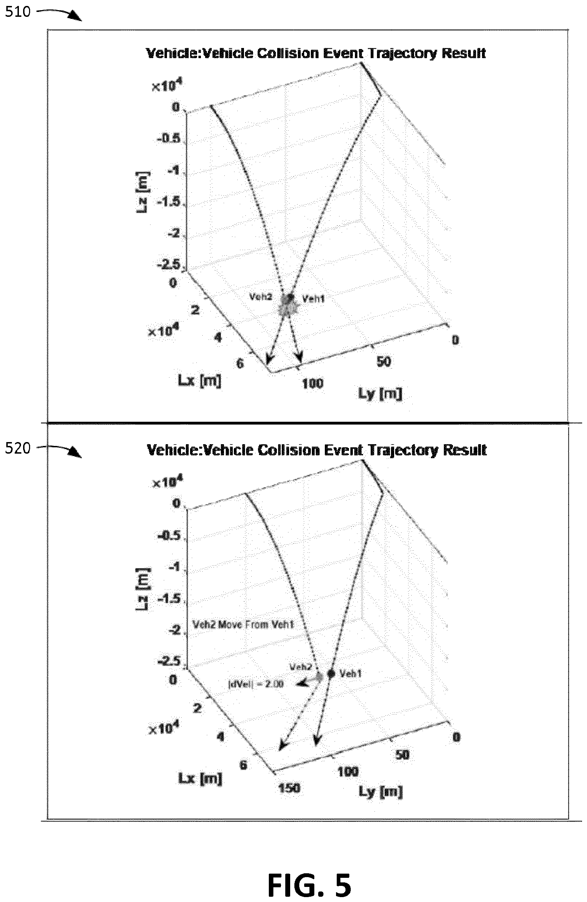

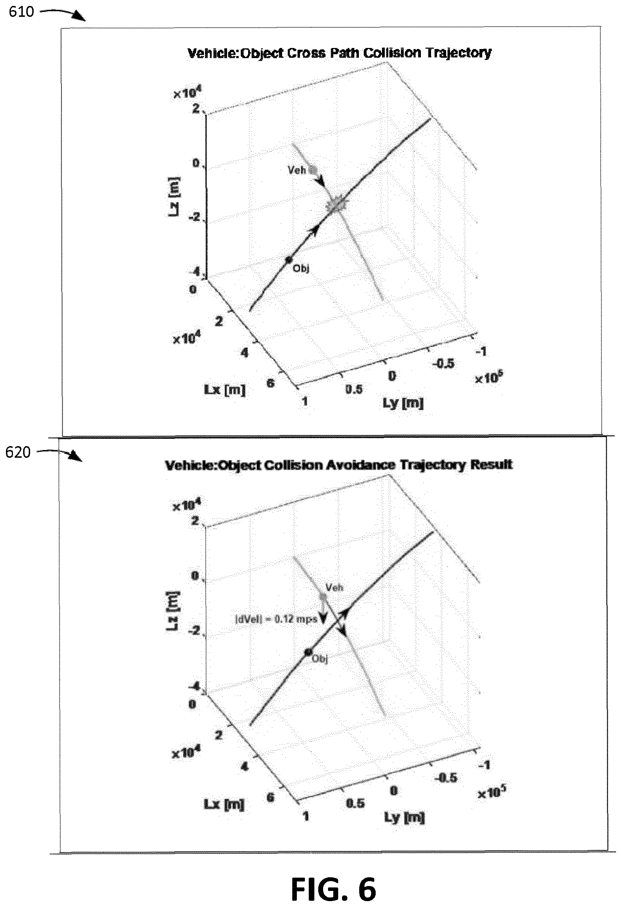

Process 300 further may include calculating a zero-effort miss vector (*Z*) and a time to the zero-effort miss vector (*T_{Z}*) (block 330). For example, the collision detection component 210 may calculate *Z* and a time *T_{Z}* as part of detecting a vehicle collision event within a vehicle-object pair. In some examples, *Z* may indicate the minimum relative position vector that occurs as a first vehicle 110 or object passes a second vehicle 110 or object, assuming the second object's thrust vector were to cease and both objects were to coast under the acceleration of gravity only. That is, *Z* describes the point of closest approach whereas *T_{Z}* indicates a time when this point will occur. A magnitude of *Z(T_{Z})_{B}* being smaller than the combined sizes of encroaching objects and a value of *T_{Z}* being or around 0 indicates that a collision may be imminent, corresponding to a vehicle collision event. In some examples, *T_{Z}* may represent the severity of a collision event. When a future predicted trajectory between a vehicle 110 and an object in a vehicle-object pair is plotted on a trajectory map, a *T_{Z}* value of or around 0 may be represented, on the trajectory map, as a collision between the vehicles 110 or the vehicle 110 and the object (e.g., as described in greater detail with respect to FIG. 5 and FIG. 6).

Process 300 also may include determining whether *Z* and *T_{Z}* satisfy safety thresholds. (block 340). For example, the collision detection component 210 may determine whether Z and *T_{Z}* satisfy safety thresholds (e.g., the closest point of approach *Z* is sufficiently large, and the time *T_{Z}* to this point Z is sufficiently long). In some examples, the safety thresholds for *Z* and *T_{Z}* may be configurable and may take into consideration the vehicle and object sizes, safe distance, and the response capability of the vehicle 110 to perform a collision avoidance maneuver. Additionally, or alternatively, the safety thresholds for *Z* and *T_{Z}* may be based on the level of detection. For example, an appropriately conservative level of detection may result in earlier detection, thereby reducing the level of disruption of a collision avoidance maneuver and reducing gas consumption, whereas an overly conservative level of detection may result in the performance of unneeded collision avoidance maneuvers.

If, for example, *Z* and *T_{Z}* do not satisfy safety thresholds (block 340-NO), process 300 may further include storing, in a collision event report, an indication that the pair (e.g., the vehicle-object pair in question) is at risk for a collision (block 350). In some examples, the collision detection component 210 may output the collision event report, to the collision avoidance component 220, in which the collision event report indicates vehicle-object pairs at risk for collisions. In some examples, described herein, the collision avoidance component 220 may use the collision event report to analyze the trajectory of each vehicle within each vehicle-object pair that is at risk for collision, and generate guidance vectors, delta velocity information, trajectory adjustment control instructions, etc., that, when executed, cause the vehicle 110 to avoid a collision.

As further shown in FIG. 3, process 300 may return to block 320 whereby blocks 320-350 may be repeated for each vehicle-object pair identified in the data structure generated at step 310. In this way, the collision risk may be identified for each vehicle-object pair. In some examples, the collision detection component 210 may add to the collision event report each time a collision risk is identified for a vehicle-object pair. Further, if a new vehicle 110 is connected to the centralized coordinated vehicle guidance system 120, and/or a new object is detected, the data structure may be updated to reflect the newly connected and detected vehicle 110 and/or object, and process 300 may be repeated. Also, if, at block 340, Z and *T_{Z}* satisfy safety thresholds (block 340-YES), process 300 may return to block 320 without storing an indication that the pair in question is at risk for collision, since satisfaction of the safety thresholds indicates that a collision risk does not exist.

FIG. 4 shows an example flowchart of a process for generating and outputting delta velocity information for adjusting the trajectory of vehicles at risk for a collision. The blocks of FIG. 4 may be implemented in the environment of FIG. 1, for example, and are described using reference numbers of elements depicted in FIG. 1.

As shown in FIG. 4, process 400 may include identifying a reference vehicle 110 at risk for a collision (block 410). For example, the collision avoidance component 220 may identify a reference vehicle 110 at risk for a collision based on a collision event report or an indication that a vehicle-object pair is at risk for collision (e.g., as identified by the collision detection component 210 in accordance with process 300 of FIG. 3). In some examples, the collision avoidance component 220 may identify the reference vehicle 110 as one of the vehicles 110 in the vehicle-object pair.

Process 400 also may include identifying all vehicles and objects at risk for collision with the reference vehicle 110 (block 420). For example, the collision avoidance component 220 may identify all vehicles 110 and objects at risk for collision with the reference vehicle 110 (e.g., from the collision event report). As described above, the collision event report identifies collision risks for each vehicle-object pair. As an illustrative example, if the reference vehicle 110 is vehicle 110-1, the collision avoidance component 220 may identify that vehicle 110-1 is at risk for collision with vehicle 110-2 and/or another object, based on the information obtained from the collision event report.

Process 400 further may include determining a time use condition (TUC) value (block 430). In some examples, the TUC value may describe a level of urgency to adjust the reference vehicle's 110 trajectory, and may be based on the *T_{Z}* value as well as a distance or range between the reference vehicle 110 and the vehicle or object at risk of colliding with the reference vehicle 110. Also, the TUC value may be based on a maximum tolerance threshold change in velocity for the reference vehicle 110 to avoid a collision, which may be used to define a collision avoidance or trajectory adjustment approach (e.g., a gradual "steer-off' approach, or a sharper "dog-leg" approach). For example, as described in further detail herein, a greater change in velocity may be more likely to avoid a collision with a lower deviation in trajectory path/angle (i.e., a lower level of disruption in original trajectory of the reference vehicle 110), but at the expense of greater consumption of fuel. Conversely, a lower change in velocity may result in a lower consumption of fuel, but may require more frequent trajectory change to avoid a collision (i.e., a higher level of disruption in original trajectory). Thus, the TUC value may factor in the maximum tolerance threshold change in velocity for the reference vehicle 110, which may be based on fuel consumption limits, reference vehicle 110 capabilities, maneuverability capabilities, etc. Additionally, or alternatively, the TUC value may factor in a maximum tolerance change in trajectory path or angle.

Process 400 also may include selecting a trajectory adjustment approach based on the TUC value (block 440). For example, the collision avoidance component 220 may select a trajectory adjustment approach based on the TUC value. In some examples, the trajectory adjustment approach may describe degree or sharpness of the trajectory adjustment (e.g., a gradual or "steer-off approach" adjustment, or a sharp "dog-leg approach" adjustment). In some examples, the collision avoidance component 220 may store thresholds identifying which adjustment approach to select based on the TUC value. Additionally, or alternatively, the trajectory adjustment approach may be further based on additional factors, such as vehicle fuel efficiency, maneuverability capabilities, mission objectives, kinematics, destination information, or the like.

In general, the trajectory adjustment approach may be selected so as to create a threshold separation between the reference vehicle 110 and the vehicle or object at risk of a collision, with a minimal change in trajectory and/or velocity (thereby reducing fuel consumption and disruption of the reference vehicle's 110 original trajectory). While the steer-off approach may minimize a change in trajectory direction (thus minimizing the disruption in mission objectives of the reference vehicle 110), the steer-off approach may require a greater change in velocity than the dog-leg approach to achieve a threshold separation between the reference vehicle 110 and the vehicle or object at risk of a collision. Thus, if the change in velocity required to avoid a collision (e.g., create separation) using the steer-off approach is below a tolerance threshold, the steer-off approach may be used, thereby minimizing the change in trajectory direction, and minimizing disruption of the reference vehicle's 110 trajectory (e.g., in a situation in which the reference vehicle 110 and at-risk vehicle/object are traveling in substantially the same direction). On the other hand, if the change in velocity required to avoid a collision using the steer-off approach exceeds a tolerance threshold, the dog-leg approach may be selected instead (e.g., in a situation in which the reference vehicle 110 and at-risk vehicle/object are traveling in substantially opposite directions). Similarly, if the steer-off approach would not avoid the collision, even at the reference vehicle's 110 maximum potential velocity, the dog-leg approach may be selected.

In some examples, a different trajectory adjustment approach may be selected. That is to say, the trajectory adjustment approach may be a quantitative value, such as the angle or direction of the trajectory adjustment, whereby the angle/direction is selected to minimize changes in direction and velocity, while still creating sufficient separation to avoid a collision. In general, the angle at which the trajectory is adjusted, and the change in velocity may be minimized while still creating sufficient separation as to avoid a collision.

Process 400 further may include determining a trajectory adjustments based on the trajectory adjustment approach (block 450). For example, the collision avoidance component 220 may determine a trajectory adjustments based on the trajectory adjustment approach. In some examples, the trajectory adjustments may identify delta velocity information, which may be either negative (e.g., to slow the reference vehicle 110) or positive (e.g., to speed up the reference vehicle 110). Additionally, or alternatively, the trajectory adjustments may identify guidance vectors corresponding to a change in trajectory direction and/or angle. In general, the collision avoidance component 220 may minimize changes in velocity and/or trajectory direction while satisfying safety thresholds of *Z* and *Tz* (e.g., thresholds describing the relative position between the reference vehicle 110 and other vehicle/object, and time durations to this relative position). Additionally, or alternatively, the collision avoidance component 220 may optimize or minimize changes to other factors, such as acceleration, fuel consumption, trajectory disruptions, etc. In the event multiple vehicles are involved with potential collisions with the reference vehicle 110, the collision avoidance component 220 may determine trajectory adjustment approaches and delta velocities for each of the involved vehicles.

Process 400 also may include outputting the trajectory adjustment information (block 460). For example, the collision avoidance component 220 may output the trajectory adjustment information (e.g., to the reference vehicle 110). In some examples, the trajectory adjustment information may be in the form of guidance vectors, changes in velocity/acceleration, propulsion control instructions/commands, etc., that when executed, cause the trajectory of the reference vehicle 110 to change so as to avoid a collision.

As shown in FIG. 4, process 400 may be repeated for each reference vehicle 110 at risk for a collision, and for each vehicle-object pair (e.g., as identified in the collision event report). In this way, the trajectory of each vehicle 110 that is at risk for a collision may be adjusted in a manner that minimizes disruption and fuel consumption. Also, by repeating process 400 for each vehicle 110 involved in an at-risk collision event, the collision avoidance component 220 may determine whether the trajectory adjustments (e.g., the delta velocity information, corresponding guidance vectors, etc.) produced at block 460 may result in a collision with a different vehicle. Accordingly, the collision avoidance component 220 may repeat process 400 to make further adjustments to avoid additional collisions. In some examples, prior to outputting the delta velocity information (e.g., at block 460), the collision avoidance component 220 may run a simulation to identify whether the trajectory adjustments will result in collision avoidance between the reference vehicle 110 in the vehicle-object pair in question, and whether a collision may occur between the reference vehicle 110 and a different vehicle or object outside of the vehicle-object in question.

As described above with respect to FIGS. 3 and 4, the operations and/or controls of vehicles 110 may be centrally coordinated by centrally collecting vehicle and objects analytics data to track and monitor the relative positions of vehicles and objects. This central collection of analytics data allows the centralized coordinated vehicle guidance system 120 to monitor vehicle and object trajectories, proactively predict collision risks, and take mitigating collision avoiding actions to avoid collisions while considering the trajectory of all vehicles 110 connected to the centralized coordinated vehicle guidance system 120 and objects detected by the centralized coordinated vehicle guidance system 120. In this way, collisions may be avoided, whether the vehicles 110 may be traveling in relatively the same direction, or whether the vehicles 110 are traveling in relatively opposite directions. Further, collision avoidance guidance may be provided in which multiple vehicles 110 are involved, and in the 3D domain (e.g., for space vehicles). Moreover, real-time collision avoidance (e.g., for use in space vehicles) may be provided.

FIG. 5 illustrates example trajectory maps showing a steer-off approach for avoiding a collision between two vehicles traveling in substantially the same path. Trajectory map 510 shows the predicted trajectory of two vehicles 110 (e.g., "Veh1" and "Veh2"), which may be determined based on the analytics data of each of Veh1 and Veh2 (e.g., vehicle speed, acceleration, kinematics, navigational data, etc.). As shown in the trajectory map 510, Veh1 and Veh2 may be traveling along a similar path in a similar direction, but may be at risk for a collision (e.g., as represented by the predicted trajectory, a zero-effort miss value Z, and a time *T_{Z}* as described above with respect to process 300). In this situation, collision avoidance procedures may be executed (e.g., by the collision avoidance component 220 in accordance with process 400). The results of such procedures may be shown in trajectory map 520 in which Veh2 adjusts its trajectory path to avoid a collision with Veh1. For example, the collision avoidance component 220 may output, to Veh2, trajectory adjustment information that adjusts the trajectory of Veh2 so as to avoid a collision (e.g., by satisfying safety thresholds for *Z* and *T_{Z}*) while minimizing trajectory direction change, velocity changes, fuel consumption, etc. In the example shown in FIG. 5, a "steer-off' approach may be used, as the amount of time to make the trajectory adjustments is sufficient without requiring a sharper adjustment.

FIG. 6 illustrates example trajectory maps showing a dog-leg approach for avoiding a collision between a vehicle and an object traveling in substantially opposite paths. Trajectory map 610 shows the predicted trajectory of a vehicle 110 (e.g., "Veh") and object ("Obj") which may be determined based on the analytics data of each of Veh and of Obj (e.g., speed, acceleration, kinematics, navigational data, etc.). As shown in the trajectory map 610, Veh and Obj may be traveling along substantially opposite paths in substantially opposite directions, and may be at risk for a collision (e.g., as represented by the predicted trajectory, a zero-effort miss value *Z,* and a time *T_{Z}* as described above with respect to process 300). In this situation, collision avoidance procedures may be executed (e.g., by the collision avoidance component 220 in accordance with process 400). The results of such procedures may be shown in trajectory map 620 in which Veh adjusts its trajectory path to avoid a collision with Obj. For example, the collision avoidance component 220 may output, to Veh, trajectory adjustment information that adjusts the trajectory of Veh2 so as to avoid a collision (e.g., by satisfying safety thresholds for *Z* and *T_{Z}*) while minimizing trajectory direction change, velocity changes, fuel consumption, etc. In the example shown in FIG. 5, a "dog-leg" approach may be used, as the amount of time to make the trajectory adjustments is relatively short, thus requiring a sharper adjustment than the "steer-off' approach.

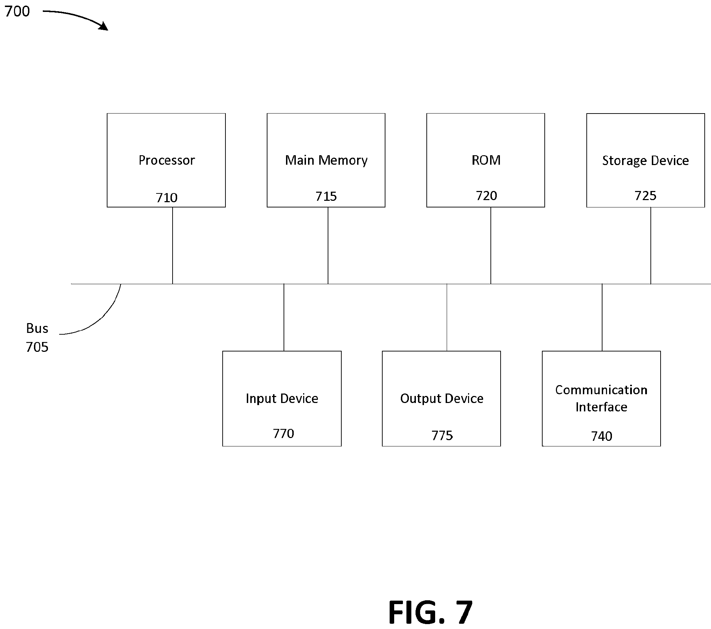

FIG. 7 illustrates example components of a device 700 that may be used within environment 100 of FIG. 1. Device 700 may correspond to the vehicles 110 and the centralized coordinated vehicle guidance system 120. Each of the vehicles 110 and the centralized coordinated vehicle guidance system 120 may include one or more devices 700 and/or one or more components of device 700.

As shown in FIG. 7, device 700 may include a bus 705, a processor 710, a main memory 715, a read only memory (ROM) 720, a storage device 725, an input device 770, an output device 775, and a communication interface 740.

Bus 705 may include a path that permits communication among the components of device 700. Processor 710 may include a processor, a microprocessor, an application specific integrated circuit (ASIC), a field programmable gate array (FPGA), or another type of processor that interprets and executes instructions. Main memory 715 may include a random access memory (RAM) or another type of dynamic storage device that stores information or instructions for execution by processor 710. ROM 720 may include a ROM device or another type of static storage device that stores static information or instructions for use by processor 710. Storage device 725 may include a magnetic storage medium, such as a hard disk drive, or a removable memory, such as a flash memory.

Input device 770 may include a component that permits an operator to input information to device 700, such as a control button, a keyboard, a keypad, or another type of input device. Output device 775 may include a component that outputs information to the operator, such as a light emitting diode (LED), a display, or another type of output device. Communication interface 740 may include any transceiver-like component that enables device 700 to communicate with other devices or networks. In some implementations, communication interface 740 may include a wireless interface, a wired interface, or a combination of a wireless interface and a wired interface. In examples, communication interface 740 may receiver computer readable program instructions from a network and may forward the computer readable program instructions for storage in a computer readable storage medium (e.g., storage device 725).

Device 700 may perform certain operations, as described in detail below. Device 700 may perform these operations in response to processor 710 executing software instructions contained in a computer-readable medium, such as main memory 715. A computer-readable medium may be defined as a non-transitory memory device and is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. A memory device may include memory space within a single physical storage device or memory space spread across multiple physical storage devices.

The software instructions may be read into main memory 715 from another computer-readable medium, such as storage device 725, or from another device via communication interface 740. The software instructions contained in main memory 715 may direct processor 710 to perform processes that will be described in greater detail herein. Alternatively, hardwired circuitry may be used in place of or in combination with software instructions to implement processes described herein. Thus, implementations described herein are not limited to any specific combination of hardware circuitry and software.

In some implementations, device 700 may include additional components, fewer components, different components, or differently arranged components than are shown in FIG. 7.

Aspects of the present disclosure are described herein with reference to flowchart illustrations and/or block diagrams of methods, apparatus (systems), and computer program products according to examples of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The flowchart and block diagrams in the Figures illustrate the architecture, functionality, and operation of possible implementations of systems, methods, and computer program products according to various examples of the present disclosure. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Examples of the disclosure may include a system, a method, and/or a computer program product at any possible technical detail level of integration. The computer program product may include a computer readable storage medium (or media) having computer readable program instructions thereon for causing a processor to carry out or execute aspects and/or processes of the present disclosure.

In examples, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on a user's computer, partly on the user's computer, as a stand-alone software package, partly on the user's computer and partly on a remote computer or entirely on the remote computer or server.

In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

In examples, a service provider could offer to perform the processes described herein. In this case, the service provider can create, maintain, deploy, support, etc., the computer infrastructure that performs the process steps of the disclosure for one or more customers. These customers may be, for example, any business that uses technology. In return, the service provider can receive payment from the customer(s) under a subscription and/or fee agreement and/or the service provider can receive payment from the sale of advertising content to one or more third parties.

The foregoing description provides illustration and description, but is not intended to be exhaustive or to limit the possible implementations to the precise form disclosed. Modifications and variations are possible in light of the above disclosure or may be acquired from practice of the implementations.

It will be apparent that different examples of the description provided above may be implemented in many different forms of software, firmware, and hardware in the implementations illustrated in the figures. The actual software code or specialized control hardware used to implement these examples is not limiting of the implementations. Thus, the operation and behavior of these examples were described without reference to the specific software code-it being understood that software and control hardware can be designed to implement these examples based on the description herein.

Even though particular combinations of features are recited in the claims and/or disclosed in the specification, these combinations are not intended to limit the disclosure of the possible implementations. In fact, many of these features may be combined in ways not specifically recited in the claims and/or disclosed in the specification. Although each dependent claim listed below may directly depend on only one other claim, the disclosure of the possible implementations includes each dependent claim in combination with every other claim in the claim set.

While the present disclosure has been disclosed with respect to a limited number of examples, those skilled in the art, having the benefit of this disclosure, will appreciate numerous modifications and variations there from. It is intended that the appended claims cover such modifications and variations as fall within the true spirit and scope of the disclosure.

While the scope of protection is determined by the appended claims, realizations of the present disclosure can be made in many ways including, but not limited to, those according to the following Clauses:
Clause 1. A computer-implemented method performed by a centralized coordinated vehicle guidance system (120) comprising:
   obtaining analytics data for a plurality of vehicles (110, 110-1) or objects centrally communicating with or detected by the centralized coordinated vehicle guidance system (120);
   detecting, based on the analytics data, a collision event within a vehicle object pair;
   determining trajectory adjustment information for a vehicle in the vehicle object pair involved in the collision event; and
   outputting the trajectory adjustment information to cause the vehicle to modify its trajectory.
Clause 2. The method of Clause 1, wherein the determining the collision event comprises calculating a zero-effort miss value and a time value to the zero-effort miss value; and
   determining that the zero-effort miss value or the time value do not satisfy a safety threshold.
Clause 3. The method of Clause 1 or 2, further comprising selecting a trajectory adjustment approach based on a time use condition value, wherein the determining the trajectory adjustments are based on the selected trajectory adjustment approach.
Clause 4. The method of any one of Clauses 1-3, wherein the vehicles in the vehicle-object pair are traveling in substantially a same direction.
Clause 5. The method of any one of Clauses 1-4, further comprising:
   generating a data structure identifying a plurality of vehicle-object pairs for vehicles and objects connected to or detected by the centralized coordinated vehicle guidance system; and
   detecting collision events within each of the plurality of vehicle-object pairs identified in the data structure;
   determining respective trajectory adjustments for respective vehicles in each of the plurality of vehicle-object pairs; and
   outputting the respective trajectory adjustments causing the respective vehicles to modify trajectories.
Clause 6. The method of Clause 5, further comprising storing information regarding the detected collision events in a collision event report, wherein the detecting the collision events is based on the collision event report.
Clause 7. The method of any one of Clauses 1-6, wherein the analytics data comprises at least one of:
   vehicle sensor readings;
   vehicle speed;
   vehicle acceleration;
   vehicle position;
   vehicle actual and planned trajectory;
   vehicle specifications;
   vehicle maneuver capabilities;
   object shape;
   object dimensions;
   object image data;
   object type;
   object velocity;
   object acceleration; and
   object travel path.
Clause 8. The method of any one of Clauses 1-7, wherein the trajectory adjustment information comprises at least one of:
   a change in vehicle speed;
   a change in vehicle travel direction;
   guidance vectors;
   navigation data; and
   vehicle propulsion control instructions.
Clause 9. A computer program product comprising a computer readable storage medium having program instructions embodied therewith, the program instructions being executable by a computing device (700) of centralized coordinated vehicle guidance system (120) to cause the computing device (700) to perform operations comprising:
   obtaining analytics data for a plurality of vehicles or objects centrally communicating with or detected by the centralized coordinated vehicle guidance system (120);
   detecting, based on the analytics data, a collision event within a vehicle-object pair;
   determining trajectory adjustment information for a vehicle in the vehicle-object pair involved in the collision event; and
   outputting the trajectory adjustment information to cause the vehicle to modify its trajectory.
Clause 10. The computer program product of Clause 9, wherein the determining of the collision event comprises calculating a zero-effort miss value and a time value to the zero-effort miss value; and
   determining that the zero-effort miss value or the time value do not satisfy a safety threshold.
Clause 11. The computer program product of Clause 9 or 10, wherein the operations further comprise selecting a trajectory adjustment approach based on a time use condition value, wherein the determining the trajectory adjustments are based on the selected trajectory adjustment approach.
Clause 12. The computer program product of any one of Clauses 9-11, wherein the vehicles in the vehicle-object pair are traveling in substantially a same direction.
Clause 13. The computer program product of any one of Clauses 9-12, wherein the operations further comprise:
   generating a data structure identifying a plurality of vehicle-object pairs for vehicles and objects connected to or detected by the centralized coordinated vehicle guidance system; and
   detecting collision events within each of the plurality of vehicle-object pairs identified in the data structure;
   determining respective trajectory adjustments for respective vehicles in each of the plurality of vehicle-object pairs; and
   outputting the respective trajectory adjustments cause the respective vehicles to modify trajectories.
Clause 14. The computer program product of Clause 13, wherein the operations further comprise storing information regarding the detected collision events in a collision event report.
Clause 15. The computer program product of any one of Clauses 9-14, wherein the analytics data comprises at least one of:
   vehicle sensor readings;
   vehicle speed;
   vehicle acceleration;
   vehicle position;
   vehicle actual and planned trajectory;
   vehicle specifications;
   vehicle maneuver capabilities;
   object shape;
   object dimensions;
   object image data;
   object type;
   object velocity;
   object acceleration; and
   object travel path.
Clause 16. The computer program product of any one of Clauses 9-15, wherein the trajectory adjustment information comprises at least one of:
   a change in vehicle speed;
   a change in vehicle travel direction;
   guidance vectors;
   navigation data; and
   vehicle propulsion control instructions.
Clause 17. A system comprising:
   a processor (710), a computer readable memory, a non-transitory computer readable storage medium associated with a computing device (700) of a centralized coordinated vehicle guidance system (120), and program instructions executable by the computing device (700) to cause the computing device (700) to perform operations comprising:
      obtaining analytics data for a plurality of vehicles or objects centrally communicating with or detected by the centralized coordinated vehicle guidance system (120);
      detecting, based on the analytics data, a collision event within a vehicle-object pair;
      determining trajectory adjustment information for a vehicle in the vehicle-object pair involved in the collision event; and
      outputting the trajectory adjustment information to cause the vehicle to modify its trajectory.
Clause 18. The system of Clause 17, wherein the determining the collision event comprises calculating a zero-effort miss value and a time value to the zero-effort miss value; and
   determining that the zero-effort miss value or the time value do not satisfy a safety threshold.
Clause 19. The system of Clause 17 or 18, wherein the operations further comprise selecting a trajectory adjustment approach based on a time use condition value, wherein the determining the trajectory adjustments are based on the selected trajectory adjustment approach.
Clause 20. The system of any one of Clauses 17-19, wherein the vehicles in the vehicle-object pair are traveling in substantially a same direction.

No element, act, or instruction used in the present application should be construed as critical or essential unless explicitly described as such. Also, as used herein, the article "a" is intended to include one or more items and may be used interchangeably with "one or more." Where only one item is intended, the term "one" or similar language is used. Further, the phrase "based on" is intended to mean "based, at least in part, on" unless explicitly stated otherwise.

## Claims

1. A computer-implemented method performed by a centralized coordinated vehicle guidance system (120) comprising:
obtaining analytics data for a plurality of vehicles (110-1, ..., 110-N) or objects centrally communicating with or detected by the centralized coordinated vehicle guidance system (120);
detecting, based on the analytics data, a collision event within a vehicle object pair;
determining trajectory adjustment information for a vehicle in the vehicle object pair involved in the collision event; and
outputting the trajectory adjustment information to cause the vehicle to modify its trajectory.

2. The method of claim 1, wherein the determining the collision event comprises calculating a zero-effort miss value and a time value to the zero-effort miss value; and
determining that the zero-effort miss value or the time value do not satisfy a safety threshold.

3. The method of claim 1 or 2, further comprising selecting a trajectory adjustment approach based on a time use condition value, wherein the determining the trajectory adjustments are based on the selected trajectory adjustment approach.

4. The method of any one of claims 1-3, wherein the vehicles in the vehicle-object pair are traveling in substantially a same direction.

5. The method of any one of claims 1-4, further comprising:
generating a data structure identifying a plurality of vehicle-object pairs for vehicles and objects connected to or detected by the centralized coordinated vehicle guidance system (120); and
detecting collision events within each of the plurality of vehicle-object pairs identified in the data structure;
determining respective trajectory adjustments for respective vehicles in each of the plurality of vehicle-object pairs; and
outputting the respective trajectory adjustments causing the respective vehicles to modify trajectories.

6. The method of claim 5, further comprising storing information regarding the detected collision events in a collision event report, wherein the detecting the collision events is based on the collision event report.

7. The method of any one of claims 1-6, wherein the analytics data comprises at least one of:
vehicle sensor readings;
vehicle speed;
vehicle acceleration;
vehicle position;
vehicle actual and planned trajectory;
vehicle specifications;
vehicle maneuver capabilities;
object shape;
object dimensions;
object image data;
object type;
object velocity;
object acceleration; and
object travel path.

8. The method of any one of claims 1-7, wherein the trajectory adjustment information comprises at least one of:
a change in vehicle speed;
a change in vehicle travel direction;
guidance vectors;
navigation data; and
vehicle propulsion control instructions.

9. A system comprising:
a processor (710), a computer readable memory, a non-transitory computer readable storage medium associated with a computing device (700) of a centralized coordinated vehicle guidance system (120), and program instructions executable by the computing device (700) to cause the computing device (700) to perform operations comprising:
obtaining analytics data for a plurality of vehicles or objects centrally communicating with or detected by the centralized coordinated vehicle guidance system (120);
detecting, based on the analytics data, a collision event within a vehicle-object pair;
determining trajectory adjustment information for a vehicle in the vehicle-object pair involved in the collision event; and
outputting the trajectory adjustment information to cause the vehicle to modify its trajectory.

10. The system of claim 9, wherein the determining the collision event comprises calculating a zero-effort miss value and a time value to the zero-effort miss value; and
determining that the zero-effort miss value or the time value do not satisfy a safety threshold.

11. The system of claim 10 or 11, wherein the operations further comprise selecting a trajectory adjustment approach based on a time use condition value, wherein the determining the trajectory adjustments are based on the selected trajectory adjustment approach.

12. The system of any one of claims 9-11, wherein the vehicles in the vehicle-object pair are traveling in substantially a same direction.

13. The system of any one of claims 9-12, further comprising:
generating a data structure identifying a plurality of vehicle-object pairs for vehicles and objects connected to or detected by the centralized coordinated vehicle guidance system (120); and
detecting collision events within each of the plurality of vehicle-object pairs identified in the data structure;
determining respective trajectory adjustments for respective vehicles in each of the plurality of vehicle-object pairs; and
outputting the respective trajectory adjustments causing the respective vehicles to modify trajectories.

14. The system of any one of claims 9-13, further comprising storing information regarding the detected collision events in a collision event report, wherein the detecting the collision events is based on the collision event report.

15. The system of any one of claims 9-14, wherein the analytics data comprises at least one of:
vehicle sensor readings;
vehicle speed;
vehicle acceleration;
vehicle position;
vehicle actual and planned trajectory;
vehicle specifications;
vehicle maneuver capabilities;
object shape;
object dimensions;
object image data;
object type;
object velocity;
object acceleration; and
object travel path; and
wherein the trajectory adjustment information comprises at least one of:
a change in vehicle speed;
a change in vehicle travel direction;
guidance vectors;
navigation data; and
vehicle propulsion control instructions.
